# EUROPEAN PATENT APPLICATION

(11) **EP 3 677 947 A1**
(43) Date of publication of application: **08.07.2020**
(21) Application number: 18850074.8
(22) Date of filing: 27.08.2018
(51) Int. Cl.: G02B 27/01, B60K 35/00, G02B 3/00, G02B 5/02

(54) **HEADUP DISPLAY DEVICE**

(30) Priority: 29.08.2017 JP 2017164211
(71) Applicant: Nippon Seiki Co., Ltd., Niigata 940-8580 (JP)
(72) Inventor: SAJI Shunsuke, Niigata (JP)
(74) Representative: Jackson, Richard Eric
(86) International application number: PCT/JP2018/031478
(87) International publication number: WO 2019/044730

(57) **Abstract**

Provided is a headup display device that suppresses luminance variance of diffusion light with respect to an obliquely disposed screen. A screen (40) is tilted with respect to an orthogonal plane (43) that is orthogonal to an optical axis (41a) of projection light (41). In the cases where the screen (40) and the optical axis (41a) of the projection light (41) are orthogonal to each other, a center line (45) of a distribution angle (β) of diffusion light (42) is set such that the center line tilts in a direction (C) with respect to an output surface (46) of the screen (40), said direction (C) being identical to a tilt direction (C) of the screen (40).

## Description

### TECHNICAL FIELD

The present invention relates to a headup display device including a screen on which light is incident obliquely.

### BACKGROUND ART

There is a so-called headup display device for displaying, on a windshield of a vehicle or the like, various types of information and making the displayed information visible along with the surrounding background. An example of a conventional technology related to a headup display device includes a technology disclosed in Patent Document 1.

A headup display device disclosed in Patent Document 1 includes a chassis housing a projector for projecting projection light, a first screen and a second screen on which reflected projection light forms an image, and a reflection system for reflecting diffusion light emitted from the first screen and the second screen.

When the diffusion light emitted from the headup display device is incident on a windshield, images displayed on the first screen and the second screen are visually recognized as a first virtual image and a second virtual image which are spaced apart from each other.

### PRIOR ART DOCUMENT

### PATENT DOCUMENT

Patent Document 1: Japanese Unexamined Patent Application Publication No. 2016-45252

### SUMMARY OF THE INVENTION

### PROBLEMS TO BE SOLVED BY THE INVENTION

The first screen may be placed to be tilted with respect to an orthogonal plane orthogonal to the optical axis of the projection light. As a result, the first virtual image falling in a direction away from an occupant is visually recognized by the occupant.

However, since the projection light is incident on the first screen obliquely, a first diffusion light emitted from the first screen is emitted obliquely. That is, since the direction of the first diffusion light changes, the luminance of the first virtual image may be nonuniform.

To make the luminance uniform, it is conceivable to adjust the luminance of the projection light incident on the first screen in advance. However, such adjustment results in complicated control of the projection light in the projector. There is desirably a headup display device providing no luminance variance of the virtual image even if the screen is placed obliquely.

The present invention aims to provide a technology for suppressing luminance variance of diffusion light even if a screen is placed obliquely.

### SOLUTION TO PROBLEM

According to an invention set forth in claim 1, provided is a headup display device including a projector for projecting projection light, and a screen on which the projection light forms an image, the screen for diffusing the projection light,
the screen being tilted with respect to an orthogonal plane orthogonal to an optical axis of the projection light, and including a diffusion unit for converting the projection light into diffusion light.

In the headup display device, a center line of a distribution angle of the diffusion light in a case where the screen and the optical axis of the projection light are orthogonal to each other is set to tilt in a direction identical to a tilt direction of the screen with respect to an orthogonal line orthogonal to an output surface of the screen.

As defined in claim 2, preferably, the diffusion unit is a microlens array, and the microlens array has a curvature increasing in a direction identical to the tilt direction of the screen.

### EFFECT OF THE INVENTION

In the invention according to claim 1, the center line of the distribution angle of the diffusion light in the case where the screen and the optical axis of the projection light are orthogonal to each other is tilted in the direction identical to the tilt direction of the screen with respect to the orthogonal line orthogonal to the output surface of the screen.

Usually, if the projection light is incident on the screen at a right angle, the center line of the distribution angle of the diffusion light is also orthogonal to the output surface of the screen. If such a screen is tilted, the center line of the distribution angle is tilted in the opposite direction to its tilt direction.

In the screen according to the present invention, the center line of the distribution angle is set such that the center line is not orthogonal to the orthogonal plane and is tilted in the direction identical to the tilt direction of the screen. Accordingly, if the screen is tilted, the center line of the distribution angle is tilted in the opposite direction. Thus, the tilt of the center line of the distribution angle caused by the tilt of the screen is suppressed. As a result, luminance variance of the diffusion light is suppressed, and the luminance variance of the virtual image displayed in the occupant's eye box is also suppressed.

In the invention according to claim 2, a microlens array is employed for the diffusion unit to convert the projection light into diffusion light, that is, to emit homogenized and shaped projection light. The curvature of the microlens array increases in the direction identical to the tilt direction of the screen. Thus, it is possible to tilt the diffusion light in the direction identical to the tilt direction of the screen.

### BRIEF DESCRIPTION OF THE DRAWINGS

Fig. 1 is a schematic diagram of a headup display device according to an embodiment of the present invention.
Fig. 2 is a diagram for explaining a screen placed to be tilted in the headup display device illustrated in Fig. 1.
Fig. 3 is a diagram for explaining an operation of the present invention together with a comparative embodiment.

### MODE FOR CARRYING OUT THE INVENTION

An embodiment of the present invention will be described below with reference to the attached drawings.

### <Embodiment>

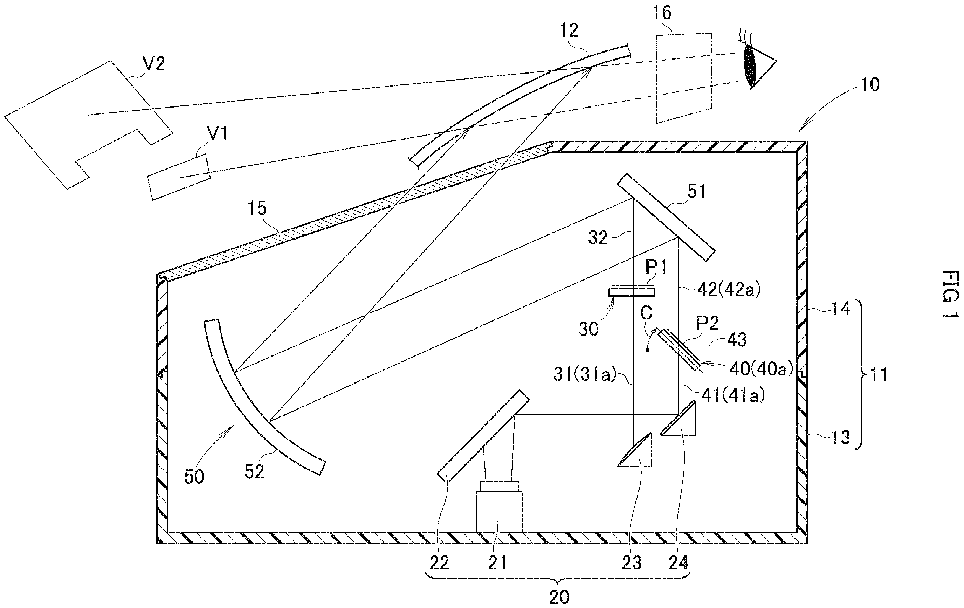

Fig. 1 illustrates a headup display device 10 mounted on a vehicle, according to the present invention. The headup display device 10 includes, in a housing 11, a projection unit 20 for projecting light, a first screen 30 and a second screen 40 on which the light forms images, and a reflection unit 50 for reflecting the light transmitted through the first screen 30 and the second screen 40 toward a windshield 12.

The housing 11 is made of a light shielding synthetic resin and has a box shape. The housing 11 includes a lower housing 13 and an upper housing 14 covering an upper opening of the lower housing 13. The upper housing 14 includes a transmission cover 15 for transmitting the light reflected from the reflection unit 50.

The projection unit 20 includes a projector 21 fixed to the bottom surface of the lower housing 13, a projection mirror 22 for reflecting the light projected from the projector 21, and a first reflection mirror 23 and a second reflection mirror 24 for each reflecting the light reflected by the projection mirror 22.

The projector 21 includes, for example, a light source for emitting light, a DMD (Digital MicroMirror Device) being a reflective display element for displaying an image, and a lens. Their detailed description is omitted. An LCOS (registered trademark: Liquid Crystal On Silicon) or a TFT (Thin Film Transistor) liquid crystal panel being a transmissive display element may be used for the display element in the projector 21.

The projection mirror 22, the first reflection mirror 23, and the second reflection mirror 24 are each formed, for example, by depositing a reflecting film on a surface of a synthetic resin base material.

The reflection unit 50 includes a first reflection mirror 51 provided on the top plate of the upper housing 14 and a second reflection mirror 52 provided on a side surface of the lower housing 13. The first reflection mirror 51 is formed, for example, by depositing a reflecting film on a surface of a synthetic resin base material. The reflecting surface of the first reflection mirror 51 has a planar shape. The second reflection mirror 52 is formed, for example, by depositing a reflecting film on a surface of a synthetic resin base material. The reflecting surface of the second reflection mirror 52 has a concave shape.

First projection light 31 and second projection light 41 which are projected from the projector 21 pass through the projection mirror 22, the first reflection mirror 23, and the second reflection mirror 24, and form images on the first screen 30 and the second screen 40, respectively.

While a first image P1 is displayed on the first screen 30, the first screen 30 emits first diffusion light 32. Similarly, while a second image P2 is displayed on the second screen 40, the second screen 40 emits second diffusion light 42.

The first diffusion light 32 and the second diffusion light 42 are reflected toward the windshield 12 through the first reflection mirror 51 and the second reflection mirror 52. The first image P1 and the second image P2 are projected on the windshield 12. An occupant can visually recognize a first virtual image V1 which is an enlargement of the first image P1 and a second virtual image V2 which is an enlargement of the second image P2.

Next, the first screen 30 and the second screen 40 will be described. Each of the first screen 30 and the second screen 40 is a transmissive screen composed of, for example, a holographic diffuser, a microlens array, a diffusion plate, and the like.

The first screen 30 is orthogonal to an optical axis 31a of the first projection light 31. In Fig. 1, the second screen 40 is tilted in a clockwise direction C with respect to an orthogonal plane 43 orthogonal to an optical axis 41a of the second projection light 41.

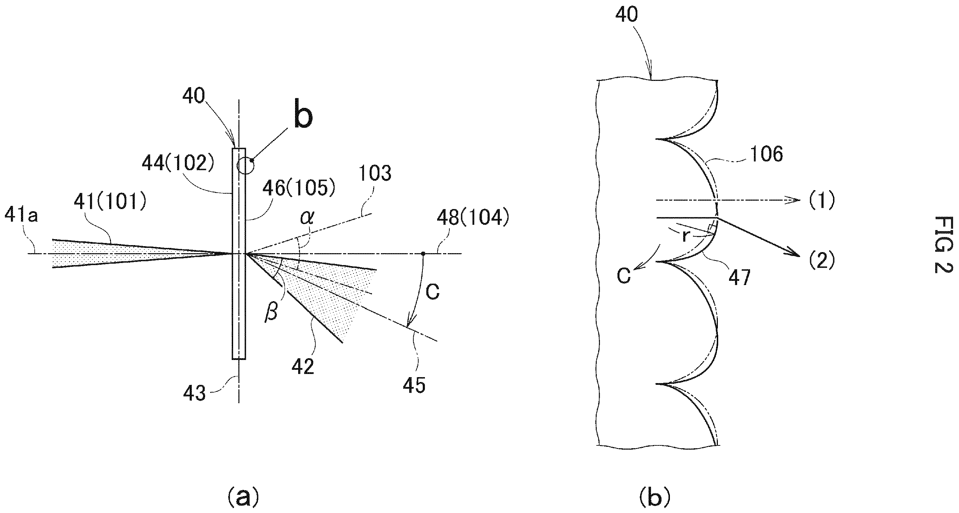

Now Fig. 2(a) is referred to. Normally, if projection light 101 is incident on an incident surface 102 at a right angle, a center line 104 of a distribution angle α (a bisector of the distribution angle α) of diffusion light 103 emitted is orthogonal to an output surface 105.

On the other hand, in the second screen 40, a center line 45 of a distribution angle β is set such that the center line 45 is not orthogonal to an output surface 46 but is tilted in the clockwise direction C (the direction identical to the direction in which the second screen 40 is tilted (see Fig. 1)) with respect to an orthogonal line 48 orthogonal to the output surface 46 if the second projection light 41 is incident on an incident surface 44 at a right angle.

Fig. 2(b) illustrates an enlarged part of a main part of a microlens array 47 (diffusion unit 47) provided in the second screen 40. As a configuration for tilting the second diffusion light 42 (see Fig. 2(a)), for example, the microlens array 47 in which the shape of its surface is changed based on the shape of a microlens array 106 employed in a normal screen is employed.

Specifically, the microlens array 47 has a curvature (the reciprocal of a radius of curvature r) increasing in the clockwise direction C (the direction identical to the tilt direction of the second screen 40).

Thus, when the direction of light transmitted through the normal microlens array 106 is used as a reference as indicated by arrow (1), the direction of light transmitted through the microlens array 47 can be changed as indicated by arrow (2). It is noted that the microlens array 47 may be provided on the incident surface 44 of the second screen 40.

Subsequently, advantageous effects of the present invention will be described.

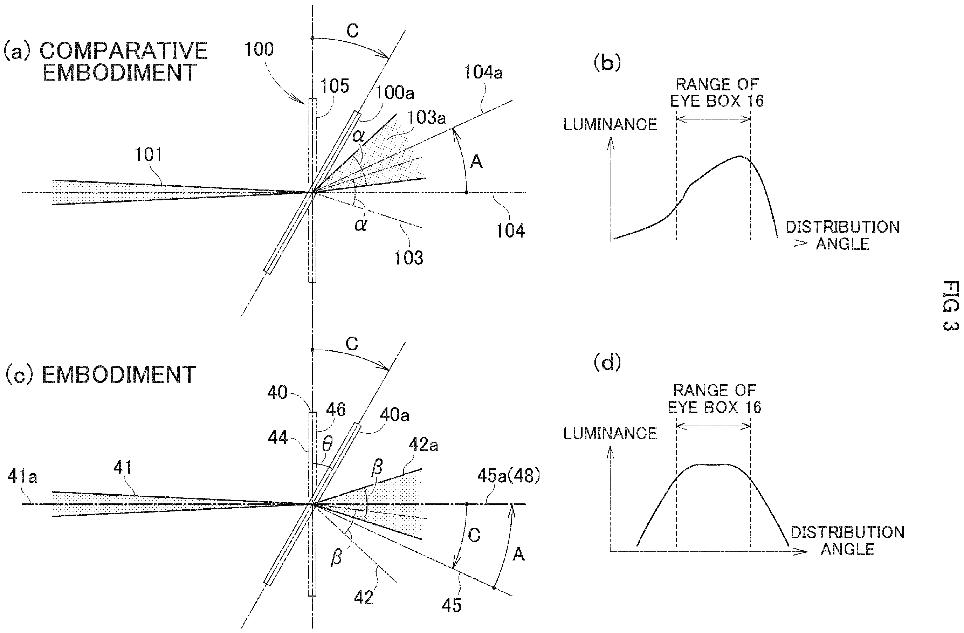

Now Fig. 3(a) is referred to. In a screen 100 (for example, corresponding to the first screen 30) as a comparative embodiment according to a conventional art, if the projection light 101 is incident on the screen 100 at a right angle, the center line 104 of the distribution angle α of the diffusion light 103 is also orthogonal to the output surface 105 of the screen 100.

If such a screen 100 is tilted in the clockwise direction C to the position of a screen 100a, the center line 104 of the distribution angle α orthogonal to the output surface 105 is tilted in a counterclockwise direction A to the position of a center line 104a. Therefore, the direction of the diffusion light 103 is changed to the direction of diffusion light 103a, so that its luminance is nonuniform. As a result, the luminance of the second virtual image V2 visually recognized within the range of an eye box 16 (see Fig. 1) also varies (see Fig. 3(b)).

Now Fig. 3(c) is referred to. In the embodiment, the center line 45 of the distribution angle β of the second diffusion light 42 is set such that the center line 45 is not orthogonal to the output surface 46 but is tilted in the clockwise direction C with respect to the orthogonal line 48 if the second projection light 41 is incident on the second screen 40 at a right angle, that is, if the optical axis 41a and the incident surface 44 are orthogonal to each other.

Accordingly, if the second screen 40 is tilted in the clockwise direction C to the position of a second screen 40a (at a tilt angle θ), the center line 45 that is tilted in the clockwise direction C in advance is tilted in the counterclockwise direction A. When the tilt direction (counterclockwise direction A) of the center line 45 caused by the tilt of the second screen 40 and the tilt direction (clockwise direction C) of the center line 45 caused by the microlens array are set to be opposed to each other, the tilt of the center line 45 is suppressed. As a result, it is possible to suppress the luminance of the second virtual image V2 from being nonuniform.

In particular, in the present embodiment, when the second screen 40 is placed to be tilted, a center line 45a of the distribution angle β of the second diffusion light 42 is set to be on the orthogonal line 48. That is, the direction of second diffusion light 42a is the same as that of a normal screen such as the first screen 30, and the luminance of the second diffusion light 42a is uniform. Accordingly, the luminance of the second virtual image V2 displayed within the range of the eye box 16 (see Fig. 1) is uniform (see Fig. 3(d)).

It is noted that the headup display device 10 according to the present invention has been described as that used in a vehicle by way of example, but is applicable to other vehicles and is not limited to such types. Further, the screen is not limited to the windshield, and may be a combiner supported by a casing. Furthermore, a diffraction grating may be employed for the diffusion unit instead of the microlens array. That is, the present invention is not limited to the embodiment as long as the operation and effect of the present invention are exhibited.

### INDUSTRIAL APPLICABILITY

Ahead-up display device according to the present invention is suitable to be mounted on a vehicle.

### DESCRIPTION OF REFERENCE NUMERALS

- 10: Headup display device
- 21: Projector
- 40: Second screen
- 41: Second projection light
- 42: Second diffusion light
- 43: Orthogonal plane
- 44: Incident surface
- 45: Center line
- 46: Output surface
- 47: Microlens array (diffusion unit)
- 48: Orthogonal line
- β: distribution angle
- C: Tilt direction (clockwise direction) of projector
- A: Counterclockwise direction

## Claims

1. A headup display device comprising:
a projector for projecting projection light; and
a screen on which the projection light forms an image for diffusing the projection light, the screen being tilted with respect to an orthogonal plane orthogonal to an optical axis of the projection light, and including a diffusion unit for converting the projection light into diffusion light,
wherein a center line of a distribution angle of the diffusion light in a case where the screen and the optical axis of the projection light are orthogonal to each other is set to tilt in a direction identical to a tilt direction of the screen with respect to an orthogonal line orthogonal to an output surface of the screen.

2. The headup display device according to claim 1, wherein the diffusion unit is a microlens array, and
the microlens array has a curvature increasing in a direction identical to the tilt direction of the screen.
